(19) Europäisches Patentamt

European Patent Office

Office européen des brevets

(11) EP 2 023 560 A1

(12) **DEMANDE DE BREVET EUROPEEN**

(43) Date de publication:
**11.02.2009 Bulletin 2009/07**

(51) Int Cl.:
***H04L 27/26*** *(2006.01)*

(21) Numéro de dépôt: **08159860.9**

(22) Date de dépôt: **07.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **09.08.2007 FR 0757019**

(71) Demandeur: **Alcatel Lucent
75008 Paris (FR)**

(72) Inventeurs:
 • **ABDI, Moussa
 75012, PARIS (FR)**

 • **DURAN TORO, Joaquin
 75014, PARIS (FR)**
 • **JARD, Alexandre
 92150, Suresnes (FR)**
 • **MEYER, Laurent
 91300, MASSY (FR)**

(74) Mandataire: **Ameline, Jean-Paul B.C.
Alcatel-Lucent
Intellectual Property & Standards
54, rue La Boétie
75008 Paris (FR)**

(54) **Dispositif et procédé de contrôle des positions de retards temporels de terminaux radio rattachés à un réseau radio de type OFDM**

(57) Un dispositif (D) est dédié au contrôle de la position d'un retard temporel associé à un terminal radio rattaché à une station de base (SB) d'un réseau radio de type OFDM. Ce dispositif (D) comprend 1) des moyens de calcul (MP) chargés d'estimer au sein d'un profil de puissance, en fonction du temps, d'un canal utilisé par un signal de séquence de pilote émis par le terminal et par des signaux d'échos de ce signal de séquence de pilote, la position du retard temporel du signal qui est associé à la puissance la plus grande, puis d'estimer la contribution à ce profil du signal dont la position du retard temporel a été estimée, et de soustraire du profil cette contribution estimée afin de délivrer un profil mis à jour, et ii) des moyens de contrôle (MC) chargés de déterminer après chaque mise à jour de profil si au moins une condition choisie est satisfaite, et dans la négative pour contraindre les moyens de calcul (MP) à reproduire les opérations d'estimation et l'opération de soustraction en utilisant le profil mis à jour, ou dans l'affirmative pour déterminer si une commande représentative d'une nouvelle valeur de temps de propagation doit être transmise au terminal en fonction de la position estimée de l'un au moins des retards temporels, associée à un signal d'écho, par rapport à une fenêtre d'analyse.

Figure unique

EP 2 023 560 A1

**Description**

L'invention concerne les réseaux de communication radio de type OFDM (« Orthogonal Frequency Division Multiplex »), et plus précisément la synchronisation temporelle des émissions des terminaux de communication dans de tels réseaux.

On notera que l'invention ne concerne que les transmissions sur les liaisons montantes (ou « uplink »), c'est-à-dire des terminaux de communication vers les stations de base (ou analogues) des réseaux radio.

On entend ici par « réseau de communication radio de type OFDM » tout réseau radio (mobile ou cellulaire) mettant en oeuvre une technique de multiplexage par répartition en fréquences orthogonales et donc requérant une synchronisation temporelle de qualité pour les transmissions sur les liaisons montantes. Par conséquent, il pourra s'agir d'un réseau terrestre OFDM implémentant une technologie issue d'une technologie satellite, ou d'un réseau de téléphonie mobile (ou cellulaire) OFDM, comme par exemple l'évolution de l'UMTS appelée LTF (« Long Term Evolution »)), ou encore d'un réseau local sans fil (standards WLAN (« Wireless Local Area Network » - IEEE 802.11a, Wi-Fi (802.11g), ETSI HiperLAN/2), WiMAX (IEEE 802.16, ETSI HiperMAN)).

Il est rappelé que la liaison montante LTE est une variante de l'OFDM pour laquelle les principes de base de répartition des ressources en fréquence sont conservés, mais où l'on précode au moyen d'une transformée de Fourier discrète (ou DFT (« Discrete Fourier Transform »)) pour transmettre le signal en temps. On notera cependant que l'invention concerne aussi bien le « DFT-spread OFDM » que l'OFDM.

Par ailleurs, on entend ici par « terminal de communication » tout équipement de communication mobile (ou portable ou encore cellulaire) capable au moins de transmettre des données (éventuellement des contenus multimédia) par voie d'ondes via un réseau radio de type OFDM. Par conséquent, il pourra par exemple s'agir d'un téléphone mobile (ou cellulaire), d'un ordinateur portable ou d'un assistant personnel numérique (ou PDA).

Comme le sait l'homme de l'art, dans les réseaux (de communication radio) de type OFDM l'accès au réseau se fait au moyen d'une multiplicité de porteuses orthogonales. Par conséquent, il est indispensable que l'accès aux ressources physiques se fasse de façon synchronisée (temporellement). En effet, les réponses impulsionnelles des canaux utilisés par tous les terminaux mobiles doivent être entièrement contenues dans un intervalle temporel appelé (en anglais) « Cyclic Prefix » (ou CP) afin d'éviter les interférences inter-symboles et donc de permettre une bonne démodulation par transformée de Fourier rapide (ou FFT).

L'absence d'une bonne synchronisation temporelle a deux effets qui se traduisent par une dégradation des performances. En effet, le signal qui se retrouve en dehors de la fenêtre de FFT (ou DFT) est complètement perdu, et il apparaît des interférences inter-symboles (ou ISI) en raison de l'extension du signal du symbole qui précède le symbole courant au-delà de l'intervalle temporel CP de ce dernier.

La détermination de la synchronisation initiale d'un terminal mobile se fait à partir du canal appelé RACH (« Random Access CHannel ») qu'il utilise pour accéder initialement au réseau. Plus précisément, lorsqu'une station de base détecte un signal RACH, elle transmet au terminal mobile qui l'a émis une commande appelée « timing advance » (avance/retard d'émission) destinée à synchroniser temporellement son émission. Cette commande dépend de la valeur estimée du temps de propagation entre le terminal mobile et la station de base à laquelle il se connecte. La station de base doit ensuite vérifier continuellement la synchronisation temporelle de l'émission de ce terminal mobile par rapport à la fenêtre de FFT (commune à tous les terminaux mobiles) du fait de la valeur estimée du temps de propagation de ses signaux. Cette vérification est indispensable du fait que le temps de propagation des signaux émis par le terminal mobile peut varier en fonction de la distance qui le sépare de sa station de base et des éventuels trajets multiples suivis par les échos de ces signaux. En outre, de nouveaux signaux d'écho peuvent apparaîtrent après la transmission du canal RACH (par exemple lorsqu'un utilisateur tourne à un coin de rue).

La vérification impose donc à la station de base de déterminer continuellement, pour chaque terminal mobile qui lui est rattaché, la valeur (ou position) de son retard temporel effectif lié au temps de propagation de ses signaux. Pour ce faire, la station de base détermine, pour chaque terminal mobile qui lui est rattaché, l'ensemble des répliques des différentes séquences de pilote (ou balise) du domaine temporel reçues, affectées de poids représentatifs des évanouissements (ou « fadings ») correspondant à leurs trajets respectifs. Si l'on considère que les séquences de pilote (prises dans le domaine temporel) sont orthogonales à leurs versions décalées, et si l'on effectue la corrélation du signal reçu avec la séquence de pilote utilisée à l'émission pour chaque position temporelle possible, on obtient des pics de corrélation qui correspondent à des positions de retard temporel, affectés des évanouissements correspondants, desquels on peut déduire une position effective de retard temporel.

Mais, dans la pratique, les séquences de pilote ne sont pas exactement orthogonales à leurs versions décalées, ce qui introduit des imprécisions de synchronisation temporelle.

L'invention a pour but de proposer une technique prenant en compte le défaut d'orthogonalité précité afin de permettre l'estimation avec une plus grande précision de la position effective du retard temporel qui est associé à chaque signal d'écho de chaque terminal mobile rattaché à une station de base.

Elle propose à cet effet un procédé, dédié au contrôle de la position d'un retard temporel associé à un terminal de communication radio rattaché à une station de base d'un réseau de communication radio de type OFDM, et comprenant les étapes suivantes :

i) estimer au sein d'un profil de puissance, en fonction du temps, d'un canal utilisé par un signal de séquence de pilote émis par le terminal et par des signaux d'échos de ce signal de séquence de pilote, la position du retard temporel du signal qui est associé à la puissance la plus grande,

ii) estimer la contribution à ce profil du signal dont la position du retard temporel a été estimée,

iii) soustraire la contribution estimée du profil afin de délivrer un profil mis à jour,

iv) reproduire de façon itérative les étapes i) à iii) jusqu'à ce qu'au moins une condition choisie soit satisfaite,

v) déterminer si une commande représentative d'une nouvelle valeur de temps de propagation doit être transmise au terminal en fonction de la position de l'un au moins des retards temporels, estimée lors de l'une des itérations et associée à un signal d'écho, par rapport à une fenêtre d'analyse.

Le procédé selon l'invention peut comporter d'autres caractéristiques qui peuvent être prises séparément ou en combinaison, et notamment :

- lors de l'étape v) on peut décider de transmettre une commande lorsque la position estimée de l'un au moins des retards temporels associés aux signaux d'échos est contenue dans un intervalle choisi de la fenêtre d'analyse lors de K intervalles de temps de transmission (ou TTI (pour « Transmission Time Interval ») successifs, avec $K \geq 1$ ;

- lors de l'étape v) on peut déterminer si l'une au moins des positions estimées de deux retards temporels, associés au signal d'écho le plus en avance et au signal d'écho le plus en retard, est contenue dans un intervalle temporel de début ou un intervalle temporel de fin de la fenêtre d'analyse ;

- on peut déterminer le profil de l'étape i) à partir d'une estimation de canal Y(n) dans le domaine temporel, où n = 0 à N-1 et N est la dimension d'une transformée de Fourier (FFT ou DFT) utilisée pour faire la transformation fréquence/ temps sur le canal. Cette estimation de canal peut être obtenue en appliquant aux signaux reçus la FFT usuelle, puis en divisant par les symboles de la séquence de pilote, porteuse par porteuse, et en faisant une transformée de Fourier inverse (IFFT ou IDFT) pour repasser en temps ;

➢ on peut déterminer le profil de l'étape i) à partir de la sommation du carré des estimations de canal dans le domaine temporel Y(n) sur toutes les antennes de réception de la station de base et tous les blocs de pilote qui sont contenus dans un intervalle de temps de transmission (TTI). On peut également et éventuellement ajouter une dimension temporelle en moyennant les profils de puissance sur plusieurs TTI en utilisant un moyennage exponentiel ou une technique analogue ;

- la condition peut par exemple être choisie parmi (au moins) une condition relative à l'utilisation complète d'une capacité de traitement dédiée de la station de base, une condition relative à l'obtention d'un écart relatif en puissance entre l'écho courant et le premier écho considéré supérieur à un seuil, et une condition relative à l'obtention d'une valeur maximale de la puissance de l'écho courant inférieure à un seuil.

L'invention propose également un dispositif, dédié au contrôle de la position d'un retard temporel associé à un terminal de communication radio rattaché à une station de base d'un réseau de communication radio de type OFDM, et comprenant :

- des moyens de calcul chargés d'estimer au sein d'un profil de puissance, en fonction du temps, d'un canal utilisé par un signal de séquence de pilote émis par le terminal et par des signaux d'échos de ce signal de séquence de pilote, la position du retard temporel du signal qui est associé à la puissance la plus grande, puis d'estimer la contribution à ce profil du signal dont la position du retard temporel a été estimée, et de soustraire cette contribution estimée du profil afin de délivrer un profil mis à jour, et

- des moyens de contrôle chargés de déterminer après chaque mise à jour de profil si au moins une condition choisie est satisfaite, et dans la négative pour contraindre les moyens de calcul à reproduire les opérations d'estimation et l'opération de soustraction en utilisant le profil mis à jour, ou dans l'affirmative pour déterminer si une commande représentative d'une nouvelle valeur de temps de propagation doit être transmise au terminal en fonction de la position de l'un au moins des retards temporels, estimée par les moyens de calcul et associée à un signal d'écho, par rapport à une fenêtre d'analyse.

Le dispositif selon l'invention peut comporter d'autres caractéristiques qui peuvent être prises séparément ou en combinaison, et notamment :

- ses moyens de contrôle peuvent être chargés d'ordonner la transmission d'une commande lorsque la position estimée de l'un au moins des retards temporels associés aux signaux d'échos est contenue dans un intervalle choisi de la fenêtre d'analyse lors de K intervalles de temps de transmission (TTI) successifs, avec K≥1 ;
- ses moyens de contrôle peuvent être chargés de déterminer si l'une au moins des positions estimées de deux retards temporels, associés au signal d'écho le plus en avance et au signal d'écho le plus en retard, est contenue dans un intervalle temporel de début ou un intervalle temporel de fin de la fenêtre d'analyse ;
- ses moyens de calcul peuvent être chargés de déterminer le profil à partir d'une estimation de canal Y(n) dans le domaine temporel, où n = 0 à N-1 et N est la dimension d'une transformée de Fourier (FFT ou DFT) utilisée pour faire la transformation fréquence/temps sur le canal ;

  ➢ ses moyens de calcul peuvent être chargés de déterminer le profil à partir d'une sommation du carré des estimations de canal dans le domaine temporel Y(n) sur toutes les antennes de réception de la station de base et tous les blocs de pilote qui sont contenus dans un intervalle de temps de transmission ;

- il peut comprendre des moyens de traitement chargés de déterminer chaque estimation de canal Y(n) à partir des signaux reçus. Cette estimation de canal peut être obtenue en appliquant aux signaux reçus la FFT usuelle, puis en divisant par les symboles de la séquence de pilote, porteuse par porteuse, et en faisant une transformée de Fourier inverse (IFFT ou IDFT) pour repasser en temps ;
- il peut comprendre des moyens de traitement auxiliaires chargés de déterminer un vecteur $\gamma_{pp}(n)$ représentatif de la fonction d'autocorrelation cyclique de la séquence de pilote dans le domaine temporel (à priori on a un seul vecteur par utilisateur) ;
- ses moyens de contrôle peuvent être chargés d'utiliser une condition qui est choisie parmi (au moins) une condition relative à l'utilisation complète d'une capacité de traitement dédiée de la station de base, une condition relative à l'obtention d'un écart relatif en puissance entre l'écho courant et le premier écho considéré inférieur à un seuil, et une condition relative à l'obtention d'une valeur maximale de la puissance de l'écho courant inférieure à un seuil.

L'invention propose également un équipement, dédié à la synchronisation des émissions de terminaux de communication au sein d'une station de base d'un réseau de communication radio de type OFDM, et comprenant un dispositif de contrôle du type de celui présenté ci-avant.

L'invention est particulièrement bien adaptée, bien que de façon non exclusive, aux réseaux de communication radio de type LTE. Mais, d'une manière générale l'invention concerne tout réseau radio utilisant une transmission montante (uplink) mettant en oeuvre une technique OFDM (et plus généralement une technique de précodage OFDM dont l'OFDM est un cas particulier), et dans lequel la répartition des ressources se fait en fréquences au moyen de porteuses orthogonales et la modulation-démodulation se fait par IFFT/FFT.

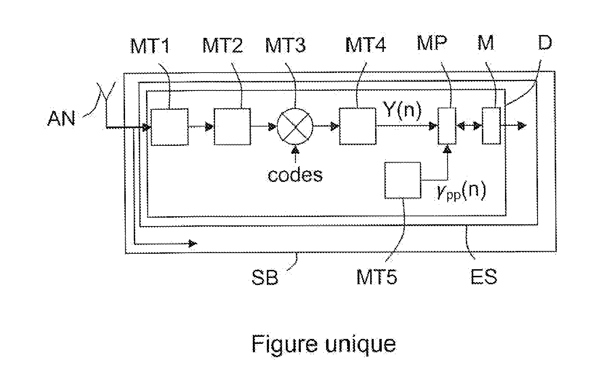

D'autres caractéristiques et avantages de l'invention apparaîtront à l'examen de la description détaillée ci-après, et du dessin annexé, sur lequel l'unique figure illustre de façon très schématique et fonctionnelle un exemple de réalisation d'un dispositif de gestion selon l'invention implanté dans un équipement de synchronisation d'une station de base d'un réseau radio de type OFDM. Le dessin annexé pourra non seulement servir à compléter l'invention, mais aussi contribuer à sa définition, le cas échéant.

L'invention a pour objet d'améliorer la précision de la détection des positions des retards temporels qui sont associés à tous les signaux d'écho de chaque terminal de communication radio momentanément rattaché à une station de base d'un réseau radio de type OFDM, en vue d'améliorer la synchronisation des émissions de tous les terminaux de communication radio qui sont momentanément rattachés à cette station de base.

Dans ce qui suit, on considère à titre d'exemple non limitatif que le réseau de communication radio de type OFDM est un réseau de téléphonie mobile (ou cellulaire) de type LTE (évolution de l'UMTS). Mais, l'invention n'est pas limitée à ce type de réseau de communication radio. Elle concerne en effet tout réseau radio (mobile ou cellulaire) mettant en oeuvre une technique de multiplexage par répartition en fréquences orthogonales et donc requérant une synchronisation temporelle en émission de qualité. Par conséquent, il pourra également s'agir d'un réseau terrestre OFDM implémentant une technologie issue d'une technologie satellite ou d'un réseau local sans fil (standards WLAN (« Wireless Local Area Network » - IEEE 802.11a, Wi-Fi (802.11g), ETSI HiperLAN/2), WiMAX (IEEE 802.16, ETSI HiperMAN)), par exemple.

Par ailleurs, on considère dans ce qui suit, à titre d'exemple non limitatif, que les terminaux de communication radio sont des téléphones mobiles (ou cellulaires). Mais, l'invention n'est pas limitée à ce type de terminal de communication radio. Elle concerne en effet tout équipement de communication mobile (ou portable ou encore cellulaire) capable au moins de transmettre des données (éventuellement des contenus multimédia) par voie d'ondes via un réseau radio de type OFDM. Par conséquent, il pourra également s'agir d'un ordinateur portable ou d'un assistant personnel numérique (ou PDA), par exemple.

Dans un réseau radio (mobile), les émissions des terminaux (mobiles) sont synchronisées par des équipements de synchronisation ES qui sont implantés dans ses stations de base SB (par exemple des Node Bs). Afin d'améliorer cette synchronisation, l'invention propose d'utiliser dans chaque station de base SB un dispositif D chargé de contrôler les positions des retards temporels qui sont associés aux signaux d'écho de chaque terminal (mobile) qui est rattaché à cette station de base SB. Dans l'exemple illustré, le dispositif de contrôle D fait partie de l'équipement de synchronisation ES, mais cela n'est pas obligatoire. Il pourrait en effet, dans une variante, être couplé à l'équipement de synchronisation ES.

Comme illustré sur l'unique figure, un dispositif de contrôle D, selon l'invention, comprend au moins un module de calcul MP et un module de contrôle MC.

Le modules de calcul MP agit sur le profil de puissance en fonction du temps P(n) de chaque canal utilisé par un terminal (mobile) pour transmettre un signal de séquence de pilote (ou balise ou encore « pilot »),

Par ailleurs, il est rappelé que dans un réseau OFDM les bits de donnée sont transmis dans des blocs qui sont séparés les uns des autres par des intervalles de garde appelés en anglais « Cyclic Prefix » (ou CP). Ces blocs sont générés à l'émission (côté terminaux mobiles) par un module de traitement effectuant des transformées de Fourier rapides (FFTs). On les appelle alors blocs FFT.

Dans le cas d'un réseau LTE (exemple non limitatif qui est ici décrit), chaque séquence de pilote (codée) est transmise dans un intervalle de temps de transmission appelé TTI (acronyme anglais pour « Transmission Time Interval ») et constitué de 14 blocs FFT parmi lesquels deux ne contiennent que des bits de pilote (ou « pilot blocks »). En outre dans ce cas, les terminaux transmettent deux types de séquence de pilote : ceux dédiés au sondage (ou estimation) de canal (appelés en anglais « sounding pilots »), qui utilisent une large bande passante, et ceux dédiés à la démodulation des données (appelés en anglais « demodulation pilots »), qui utilisent une bande passante plus étroite. Les séquences de pilote de sondage sont en effet utilisées pour l'allocation des fréquences des différents terminaux mobiles par le « scheduler » et occupent donc une plus large bande que les données (ou « data ») et sont émis indépendamment de ces dernières, tandis que les séquences de pilote de démodulation sont uniquement utilisées pour la démodulation des données (data) et occupent la même bande.

On notera qu'il est préférable, bien que non obligatoire, que le module de calcul MP utilise les séquences de pilote de sondage plutôt que les séquences de pilote de démodulation. En effet, l'invention est d'autant plus efficace que la largeur de la bande passante utilisée par la séquence de pilote est grande. Il est important de préciser que l'invention s'applique également lorsque les séquences de pilote n'occupent pas la totalité des porteuses d'un bloc. En effet, dans le cas d'un réseau LTE les pilotes occupent la totalité des porteuses d'un bloc, mais dans d'autres réseaux qui utilisent l'OFDM au lieu du DFT-spread OFDM, les séquences de pilote et les données (data) sont mélangées au sein d'un même bloc.

Il est également rappelé qu'en réception, c'est-à-dire au niveau d'une station de base SB, chaque canal précité contient non seulement le signal de séquence de pilote (ci-après appelé signal principal) émis par le terminal concerné, mais également des signaux d'échos de ce signal de séquence de pilote, résultant de trajets multiples. Par conséquent, en réception le profil de puissance d'un canal en fonction du temps P(n) est représentatif des positions temporelles des retards temporels du signal principal et des différents signaux d'échos correspondants. Le retard temporel est représentatif du temps de propagation d'un signal entre le terminal qui l'a émis et la station de base SB qui l'a reçu.

On notera que, comme illustré, le module de calcul MP peut être agencé de manière à déterminer lui-même chaque profil de puissance de canal en fonction du temps P(n). Il peut par exemple construire chaque profil P(n) à partir d'estimations de canal Y(n) dans le domaine temporel, qui sont représentatives des signaux qui ont été reçus par le(s) antennes AN de la station de base SB dans un canal associé à un terminal.

Chaque estimation de canal Y(n) dans le domaine temporel peut être obtenue en appliquant aux signaux reçus une transformée de Fourier (FFT - utilisée pour faire la transformation temps/fréquence sur le canal), puis en divisant le résultat de la transformée par les symboles de la séquence de pilote, porteuse par porteuse, et en faisant une transformée de Fourier inverse (IFFT ou IDFT) pour repasser en temps.

L'indice « n » peut prendre des valeurs comprises entre 0 et N-1, N étant la dimension de la transformée de Fourier.

Le module de calcul MP peut construire chaque profil P(n) en effectuant la double somme du carré des estimations de canal Y(n) sur toutes les antennes de réception (iRx, par exemple i = 1 ou 2) de la station de base SB et sur tous les blocs de pilote BPk (par exemple k = 1 ou 2) qui sont contenus dans un intervalle de temps de transmission TTI d'une séquence de pilote. Cette double somme peut par exemple correspondre à la formule ci-dessous :

$$P(n) = \sum_{iRx}\sum_{BPk}|Y(n)|^2 \approx \sum_{j=0}^{L-1}\left\{\sum_{iRx}\sum_{BPk}\left|a_j^{iRx,BPk}\right|^2\right\}|\gamma_{PP}(n-n_j)|^2 = \sum_{j=0}^{L-1}\Lambda_j|\gamma_{PP}(n-n_j)|^2.$$

Dans cette formule :

- l'indice « j » représente les différents trajets multiples des signaux d'échos,
- « L » représente le nombre de trajets multiples et donc de signaux d'échos effectivement présents dans le canal considéré (à priori, on a une distinction entre le nombre d'échos effectivement présents L et le nombre d'échos Lcpu que le dispositif D est en mesure de traiter),
- « $\gamma_{PP}(n)$ » désigne un vecteur qui est représentatif de la fonction d'autocorrelation cyclique de la séquence de pilote dans le domaine temporel, et qui peut être obtenu au moyen de la formule suivante :

$$\gamma_{PP}(n) = \sum_{k=0}^{N-1} p(k) \left\{ p((k+n)_{\text{mod } N}) \right\}^* ,$$

dans laquelle «*» désigne le complexe conjugué, p(k) désigne la séquence de pilote prise dans le domaine temporel et « mod N » désigne l'opérateur modulo N,

- $n_j$ désigne la valeur entière approchée du retard temporel $\tau_j$, compte tenu des deux inégalités $n_j \leq \dfrac{\tau_j}{T_C} \leq n_j + 1$ et

$$\left| \frac{\tau_j}{T_C} - n_j \right| < \left| \frac{\tau_j}{T_C} - n_j - 1 \right| ,$$ où $T_C$ désigne la période d'un « chip » (unité fondamentale de transmission),

- «$a_j$» (j = 0 à L-1) est un coefficient de pondération représentatif de l'évanouissement qui est introduit par le trajet multiple significatif (j) correspondant,

- « $\Lambda_j$» est une variable définie par la double somme $\displaystyle\sum_{iRx}\sum_{BPk}\left| a_j^{iRx,BPk} \right|^2$ , qui peut être approximée par la formule

$$\Lambda_j = \frac{P(\tau_j)}{|\gamma_{PP}(0)|^2}$$ , dans laquelle $\tau_j$ est donné par la formule $\tau_j = \arg\max_n P(n)$ , et $P(\tau_j)$ est le profil de puissance de canal pour la valeur n = $\tau_j$.

Les définitions données ci-avant découlent de la formule reliant Y(n) à $\gamma_{PP}(n)$, donnée ci-dessous :

$$Y(n) \approx \sum_{j=0}^{L-1} a_j \gamma_{PP}(n - n_j) + w(n) ,$$

dans laquelle w(n) désigne un échantillon de bruit instantané (ou AWGN (pour « Additive White Gaussian Noise »)). On notera que cette formule est approchée étant donné que dans la pratique les retards temporels r, ne sont pas des multiples de $T_C$ (période d'un chip).

Comme cela est illustré, le dispositif D peut éventuellement comprendre des modules de traitement MT1 à MT4 chargés de déterminer chaque estimation de canal Y(n) à partir des signaux reçus par les antennes AN (ou iRx). Le premier module de traitement MT1 est chargé d'appliquer une première transformée de Fourier rapide (FFT) aux signaux reçus. Cette première transformée de Fourier rapide (FFT) est commune à tous les terminaux.

Le deuxième module de traitement MT2 est chargé de sélectionner parmi les porteuses délivrées en sortie du premier module de traitement MT1 celles qui contiennent des symboles de séquence de pilote associés au terminal TC considéré (après la première FFT, le traitement se fait utilisateur par utilisateur). Le troisième module de traitement MT3 (ou module de compensation de codes) est chargé d'éliminer les symboles de séquence de pilote contenus dans les porteuses sélectionnées par le deuxième module de traitement MT2, au moyen d'une multiplication terme à terme avec des codes de type CAZAC (séquence conjuguée de la séquence orthogonale de codes qui est formée par les symboles de la séquence de pilote émis par le terminal considéré). Le quatrième module de traitement MT4 est chargé d'appliquer une transformée de Fourier rapide inverse (IFFT) (ou une IDFT) au reste du canal d'intérêt délivré par le troisième module de traitement MT, afin de délivrer les estimations de canal Y(n), n = 0 à N-1.

Le module de calcul MP est tout d'abord chargé d'estimer dans chaque profil de puissance de canal en fonction du temps P(n) la position du retard temporel du signal d'écho qui est associé à la puissance la plus grande. Toute technique connue de l'homme de l'art et destinée à permettre la détection d'un maximum dans un ensemble de données peut être utilisée.

Le module de calcul MP est ensuite chargé d'estimer la contribution à un profil donné P(n) du signal d'écho qui correspond à la puissance la plus grande et dont il vient d'estimer la position du retard temporel. Compte tenu des formules données ci-avant, la contribution d'un seul écho est donnée par $\Lambda_j|\gamma_{PP}(n-\tau_j)|^2$. Le vecteur $|\gamma_{PP}(n-n_j)|^2$ est connu

et, comme indiqué précédemment, le coefficient $\Lambda_j$ peut s'estimer au moyen de la relation $\Lambda_j = \dfrac{P(\tau_j)}{|\gamma_{PP}(0)|^2}$ .

Toute technique connue de l'homme de l'art et destinée à permettre l'estimation de la contribution d'un sous-ensemble de données de maximum connu dans un ensemble de données peut être utilisée.

Comme illustré sur l'unique figure, le dispositif D peut par exemple comprendre un module de traitement auxiliaire MT5 chargé de déterminer les vecteurs $\gamma_{pp}(n)$ (représentant chacun la fonction d'autocorrelation cyclique de la séquence de pilote du terminal considéré dans le domaine temporel, laquelle est connue de la station de base).

Dans ce cas, le module de traitement auxiliaire MT5 alimente le module de calcul MP en vecteurs $\gamma_{pp}(n)$ à partir desquels il peut estimer chaque contribution d'écho à un profil donné P(n),

Le module de calcul MP est ensuite chargé de soustraire du profil donné P(n) la contribution qu'il vient d'estimer afin de délivrer un profil mis à jour. Cette mise à jour correspond à la relation P(n) - $\Lambda_j|\gamma_{PP}(n-\tau_j)|^2 \rightarrow$ P(n).

Le module de contrôle MC intervient notamment après chaque mise à jour d'un profil P(n). Il est en effet chargé de déterminer après chaque mise à jour d'un profil P(n) si au moins une condition choisie est satisfaite.

Parmi les nombreuses conditions que l'on peut utiliser ici, on peut citer au moins les trois mentionnées ci-après.

Une première condition peut être relative à l'utilisation complète de la capacité de traitement (CPU) mise à disposition du dispositif D pour effectuer un nombre maximal de mises à jour de profil successives. Ce nombre maximal est égal au nombre Lcpu de signaux d'échos significatifs qui peuvent être pris en compte (traités par la CPU) et donc dont les contributions peuvent être successivement retranchées du profil initial. Dans ce cas, chaque fois qu'une mise à jour est effectuée par le module de calcul MP, on incrémente d'une unité la valeur d'un compteur et le module de contrôle MC compare la nouvelle valeur du compteur à Lcpu. La condition est alors satisfaite lorsque la nouvelle valeur du compteur est égale à Lcpu. Il est important de noter que le nombre Lcpu qui correspond au nombre maximal d'itérations et donc d'échos que la CPU peut traiter (limites du matériel) n'est pas le même que le nombre d'échos L utilisé dans les pages précédentes et qui correspond à la réalité physique du canal et donc au nombre de signaux d'échos reçus pour le canal considéré. Lcpu est inférieur ou égal à L.

Une deuxième condition est relative à la valeur de l'écart relatif en puissance entre l'écho courant (que l'on vient de trouver) et le premier écho considéré. Il s'agit alors de déterminer si cet écart relatif en puissance est inférieur à un seuil choisi SC1. Par exemple, la condition est satisfaite lorsque le rapport $\left|\dfrac{\Lambda_j}{\Lambda_0}\right|$ (où $\Lambda_0$ représente la valeur maximale du profil de puissance) est strictement inférieur au seuil SC1, soit $\left|\dfrac{\Lambda_j}{\Lambda_0}\right|$ < SC1.

Une troisième condition est relative à la valeur maximale courante de la puissance de l'écho courant (que l'on vient de trouver). Il s'agit alors de déterminer si cette valeur maximale est inférieure à un seuil choisi SC2, par exemple égal à la puissance moyenne du bruit dans le domaine temporel ($\sigma^2$). Dans ce cas, la condition est satisfaite lorsque la variable $\Lambda_j$ est inférieure ou égale seuil choisi SC2, soit ici $\Lambda_j \leq \sigma^2$.

Si le module de contrôle MC constate que la condition choisie n'est pas satisfaite, alors il contraint le module de calcul MP à reproduire (ou réitérer) avec le profil P(n) mis à jour les deux opérations d'estimation précitées (estimation dans le profil P(n) mis à jour de la position du retard temporel du signal qui est associé à la puissance la plus grande, et estimation de la contribution au profil P(n) mis à jour du signal qui correspond à la puissance la plus grande) et l'opération de soustraction précitée (soustraction du profil P(n) mis à jour de la contribution estimée pour délivrer un nouveau profil mis à jour).

On comprendra que plusieurs itérations successives peuvent être ordonnées par le module de contrôle MC si la condition choisie n'est pas satisfaite lors de plusieurs mises à jour successives du profil P(n) initial.

Si le module de contrôle MC constate que la condition choisie est satisfaite, alors il met fin aux itérations et détermine si une commande (timing advance), représentative d'une nouvelle valeur de temps de propagation, doit être transmise au terminal mobile concerné par le canal d'intérêt. Pour ce faire, le module de contrôle MC compare la position estimée de l'un au moins des retards temporels (associés aux différents signaux d'écho) par rapport à une fenêtre d'analyse qui est commune à tous les terminaux mobiles.

La fenêtre d'analyse est une fenêtre de la même taille que l'intervalle de garde Cyclic Prefix (ou CP) et qui se situe dans la partie gauche de la fenêtre FFT (ou DFT).

Par exemple, le module de contrôle MC détermine si les positions estimées des deux retards temporels qui sont associés au signal d'écho le plus en avance et au signal d'écho le plus en retard sont contenues dans des intervalles temporels situés respectivement au début et à la fin de l'intervalle de garde Cyclic Prefix associé au terminal considéré. Si l'une au moins des positions estimées des deux retards temporels est effectivement contenue dans l'intervalle temporel de début ou de fin du Cyclic Prefix, alors le module de contrôle MC en déduit que le terminal considéré s'est déplacé et donc que le temps de propagation de ses signaux a chargé. Il détermine alors ce nouveau temps de propagation et le communique à l'équipement de synchronisation ES pour qu'il génère une nouvelle commande (Timing Advance) contenant une commande d'ajustement d'instant d'émission qui dépend du nouveau temps de propagation et ordonne à sa station de base SB de le transmettre au terminal considéré.

Afin de se prémunir contre une détection défectueuse de la position des échos due à un excès de bruit, le module de contrôle MC peut éventuellement être agencé de manière à ne déterminer un nouveau temps de propagation (à transmettre dans une nouvelle commande) qu'à condition que l'une au moins des positions estimées des deux retards temporels (ou plus généralement de l'un au moins des retards temporels) soit effectivement contenue dans l'intervalle temporel de début ou de fin du Cyclic Prefix lors de K intervalles de temps de transmission (TTI) successifs. Par exemple K est choisi égal à 3 ou 5, et dans tous les cas, il est choisi supérieur ou égal à 1 (K≥1).

Le dispositif de contrôle D selon l'invention, et notamment son module de calcul MP et son module de traitement MT, et ses éventuels modules de traitement MT1 à MT5 peuvent être réalisés sous la forme de circuits électroniques, de modules logiciels (ou informatiques), ou d'une combinaison de circuits et de logiciels.

L'invention peut être également vue sous l'angle d'un procédé, dédié au contrôle de la position d'un retard temporel associé à un terminal de communication rattaché à une station de base SB d'un réseau radio de type OFDM, et pouvant par exemple être mis en oeuvre par un dispositif de contrôle D du type de celui décrit ci-avant. Ce procédé reprenant les fonctionnalités principales et auxiliaires présentées ci-avant, seule sa combinaison de fonctionnalités principales est présentée ci-dessous.

Ce procédé comprend les étapes suivantes :

i) estimer au sein d'un profil de puissance en fonction du temps P(n) d'un canal utilisé par un signal de séquence de pilote émis par un terminal et par des signaux d'échos de ce signal de séquence de pilote, la position du retard temporels du signal qui est associé à la puissance la plus grande,
ii) estimer la contribution à ce profil du signal dont la position du retard temporel a été estimée,
iii) soustraire la contribution estimée du profil afin de délivrer un profil mis à jour,
iv) reproduire de façon itérative les étapes i) à iii) jusqu'à ce qu'au moins une condition choisie soit satisfaite,
v) déterminer si une commande représentative d'une nouvelle valeur de temps de propagation doit être transmise au terminal en fonction de la position de l'un au moins des retards temporels, estimée lors de l'une des itérations et associée à un signal d'écho, par rapport à une fenêtre d'analyse.

L'invention ne se limite pas aux modes de réalisation de dispositif de contrôle et d'équipement de synchronisation décrits ci-avant, seulement à titre d'exemple, mais elle englobe toutes les variantes que pourra envisager l'homme de l'art dans le cadre des revendications ci-après.

**Revendications**

1. Procédé de contrôle de la position d'un retard temporel associé à un terminal de communication rattaché à une station de base (SB) d'un réseau de communication radio de type OFDM, **caractérisé en ce qu'**il comprend les étapes suivantes i) estimer au sein d'un profil de puissance, en fonction du temps, d'un canal utilisé par un signal de séquence de pilote émis par ledit terminal et par des signaux d'échos de ce signal de séquence de pilote, la position du retard temporel du signal qui est associé à la puissance la plus grande, ii) estimer la contribution audit profil du signal dont la position du retard temporel a été estimée, iii) soustraire ladite contribution estimée dudit profil afin de délivrer un profil mis à jour, iv) reproduire de façon itérative les étapes i) à iii) jusqu'à ce qu'au moins une condition choisie soit satisfaite, et v) déterminer si une commande représentative d'une nouvelle valeur de temps de propagation doit être transmise audit terminal en fonction de la position de l'un au moins des retards temporels, estimée lors de l'une des itérations et associée à un signal d'écho, par rapport à une fenêtre d'analyse.

**2.** Procédé selon la revendication 1, **caractérisé en ce qu'**à l'étape v) on transmet une commande lorsque la position estimée de l'un au moins des retards temporels associés auxdits signaux d'échos est contenue dans un intervalles choisi de ladite fenêtre d'analyse lors de K intervalles de temps de transmission (TTI) successifs, avec K≥1.

**3.** Procédé selon l'une des revendications 1 et 2, **caractérisé en ce qu'**à l'étape v) on détermine si l'une au moins des positions estimées de deux retards temporels, associés au signal d'écho le plus en avance et au signal d'écho le plus en retard, est contenue dans un intervalle temporel de début ou un intervalle temporel de fin de ladite fenêtre d'analyse.

**4.** Procédé selon l'une des revendications 1 à 3, **caractérisé en ce que** l'on détermine ledit profil de l'étape i) à partir d'une estimation de canal Y(n) dans le domaine temporel, où n = 0 à N-1 et N est la dimension d'une transformée de Fourier.

**5.** Procédé selon la revendication 4, **caractérisé en ce que** l'on obtient chaque estimation de canal en appliquant aux signaux reçus ladite transformée de Fourier, puis en divisant le résultat de la transformée par les symboles de la séquence de pilote, porteuse par porteuse, et en faisant une transformée de Fourier inverse pour repasser en temps.

**6.** Procédé selon l'une des revendications 4 et 5, **caractérisé en ce que** l'on détermine ledit profil de l'étape i) à partir d'une sommation du carré des estimations de canal Y(n) sur toutes les antennes de réception de ladite station de base et tous les blocs de pilote contenus dans un intervalle de temps de transmission (TTI).

**7.** Procédé selon l'une des revendications 1 à 6, **caractérisé en ce que** ladite condition est choisie dans un groupe comprenant au moins une condition relative à l'utilisation complète d'une capacité de traitement dédiée de ladite station de base, une condition relative à l'obtention d'un écart relatif en puissance entre l'écho courant et le premier écho considéré inférieur à un seuil, et une condition relative à l'obtention d'une valeur maximale de la puissance de l'écho courant inférieure à un seuil.

**8.** Dispositif de contrôle de la position d'un retard temporel associé à un terminal de communication rattaché à une station de base (SB) d'un réseau de communication radio de type OFDM, **caractérisé en ce qu'**il comprend i) des moyens de calcul (MP) agencés pour estimer au sein d'un profil de puissance, en fonction du temps, d'un canal utilisé par un signal de séquence de pilote émis par ledit terminal et par des signaux d'échos de ce signal de séquence de pilote, la position du retard temporel du signal qui est associé à la puissance la plus grande, puis pour estimer la contribution audit profil du signal dont la position du retard temporel a été estimée, et pour soustraire ladite contribution estimée dudit profil afin de délivrer un profil mis à jour, et ii) des moyens de contrôle (MC) agencés pour déterminer après chaque mise à jour de profil si au moins une condition choisie est satisfaite, et dans la négative pour contraindre lesdits moyens de calcul (MP) à reproduire les opérations d'estimation et l'opération de soustraction en utilisant ledit profil mis à jour, ou dans l'affirmative pour déterminer si une commande représentative d'une nouvelle valeur de temps de propagation doit être transmise audit terminal en fonction de la position de l'un au moins des retards temporels, estimée par lesdits moyens de calcul (MP) et associée à un signal d'écho, par rapport à une fenêtre d'analyse.

**9.** Dispositif selon la revendication 8, **caractérisé en ce que** lesdits moyens de contrôle (MC) sont agencés pour ordonner la transmission d'une commande lorsque la position estimée de l'un au moins des retards temporels associés auxdits signaux d'échos est contenue dans un intervalle choisi de ladite fenêtre d'analyse lors de K intervalles de temps de transmission (TTI) successifs, avec K≥1.

**10.** Dispositif selon l'une des revendications 8 et 9, **caractérisé en ce que** lesdits moyens de contrôle (MC) sont agencés pour déterminer si l'une au moins des positions estimées de deux retards temporels, associés au signal d'écho le plus en avance et au signal d'écho le plus en retard, est contenue dans un intervalle temporel de début ou un intervalle temporel de fin de ladite fenêtre d'analyse.

**11.** Dispositif selon l'une des revendications 8 à 10, **caractérisé en ce que** lesdits moyens de calcul (MP) sont agencés pour déterminer ledit profil à partir d'une estimation de canal Y(n) dans le domaine temporel, où n = 0 à N-1 et N est la dimension d'une transformée de Fourier.

**12.** Dispositif selon la revendication 11, **caractérisé en ce que** lesdits moyens de calcul (MP) sont agencés pour déterminer ledit profil à partir d'une sommation du carré des estimations de canal Y(n) sur toutes les antennes de réception de ladite station de base et tous les blocs de pilote contenus dans un intervalle de temps de transmission (TTI).

**13.** Dispositif selon l'une des revendications 8 à 12, **caractérisé en ce qu'**il comprend des moyens de traitement (MT1-MT4) agencés pour déterminer chaque estimation de canal Y(n) à partir desdits signaux reçus.

**14.** Dispositif selon la revendication 13, **caractérisé en ce que** lesdits moyens de traitement (MT1-MT4) sont agencés pour déterminer chaque estimation de canal en appliquant au signal reçu ladite transformée de Fourier, puis en divisant le résultat de la transformée par les symboles de la séquence de pilote, porteuse par porteuse, et en faisant une transformée de Fourier inverse pour repasser en temps.

**15.** Dispositif selon l'une des revendications 12 à 14, **caractérisé en ce qu'**il comprend des moyens de traitement auxiliaires (MT5) agencés pour déterminer un vecteur $\gamma_{pp}(n)$ représentatif de la fonction d'autocorrelation cyclique de la séquence de pilote dans le domaine temporel.

**16.** Dispositif selon l'une des revendications 8 à 15, **caractérisé en ce que** lesdits moyens de contrôle (MC) sont agencés pour utiliser une condition choisie dans un groupe comprenant au moins une condition relative à l'utilisation complète d'une capacité de traitement dédiée de ladite station de base, une condition relative à l'obtention d'un écart relatif en puissance entre l'écho courant et le premier écho considéré inférieur à un seuil, et une condition relative à l'obtention d'une valeur maximale de la puissance de l'écho courant inférieure à un seuil.

**17.** Equipement de synchronisation des émissions de terminaux de communication pour une station de base (SB) d'un réseau de communication radio de type OFDM, **caractérisé en ce qu'**il comprend un dispositif de contrôle (D) selon l'une des revendications 8 à 16.

Figure unique

**Office européen**

**des brevets**

**RAPPORT DE RECHERCHE EUROPEENNE**

Numéro de la demande

EP 08 15 9860

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2006/099343 A (QUALCOMM INC [US]; VRCELJ BOJAN [US]; LING FUYUN [US]; KRISHNAMOORTHI) 21 septembre 2006 (2006-09-21) * alinéa [0053] - alinéa [0065] * ----- | 1-17 | INV. H04L27/26 |
| A | EP 1 178 642 A (THOMSON LICENSING SA [FR]) 6 février 2002 (2002-02-06) * alinéa [0014] - alinéa [0015] * ----- | 1-17 | |
| A | EP 1 624 602 A (MITSUBISHI ELECTRIC CORP [JP]) 8 février 2006 (2006-02-08) * alinéa [0076] - alinéa [0081] * ----- | 1-17 | |
| A | KHALWATI MERWISE ; SOLEYMANI M REZA: "Enhanced uplink frequency synchronization algorithm for OFDMA systems in a multi-path fading environment" 2006 CANADIAN CONFERENCE ON ELECTRICAL AND COMPUTER ENGINEERING, CCECE 06; OTTAWA, ON, CANADA, MAY 7-10 2006, [Online] 7 mai 2006 (2006-05-07), - 10 mai 2006 (2006-05-10) pages 1766-1770, XP002474365 Extrait de l'Internet: URL:http://ieeexplore.ieee.org/iel5/405451 6/4054517/04054641.pdf?tp=&isnumber=&arnum ber=4054641> [extrait le 2008-03-27] * page 1767, colonne de droite, alinéa 2 * ----- -/-- | 1-17 | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 31 juillet 2008 | Draper, Alan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 08 15 9860

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | NEC GROUP: "Uplink Synchronization Maintenance" 3GPP TSG RAN WG1 MEETING #49, [Online] 7 mai 2007 (2007-05-07), - 11 mai 2007 (2007-05-11) XP002474370 Kobe, Japan Extrait de l'Internet: URL:http://www.3gpp.org/ftp/tsg_ran/WG1_RL 1/TSGR1_49/Docs/R1-072113.zip> [extrait le 2008-03-27] * le document en entier * ----- | 1-17 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 31 juillet 2008 | Draper, Alan |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................
& : membre de la même famille, document correspondant

EPO FORM 1503 03.82 (P04C02)

EP 2 023 560 A1

**ANNEXE AU RAPPORT DE RECHERCHE EUROPEENNE
RELATIF A LA DEMANDE DE BREVET EUROPEEN NO.**

EP 08 15 9860

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-07-2008

| Document brevet cité au rapport de recherche | | Date de publication | Membre(s) de la famille de brevet(s) | | Date de publication |
|---|---|---|---|---|---|
| WO 2006099343 | A | 21-09-2006 | CA | 2600561 A1 | 21-09-2006 |
| | | | CN | 101189847 A | 28-05-2008 |
| | | | EP | 1856876 A1 | 21-11-2007 |
| | | | KR | 20070110930 A | 20-11-2007 |
| EP 1178642 | A | 06-02-2002 | BR | 0103151 A | 02-04-2002 |
| | | | CN | 1336737 A | 20-02-2002 |
| | | | JP | 2002101069 A | 05-04-2002 |
| | | | KR | 20020011096 A | 07-02-2002 |
| | | | MX | PA01007703 A | 23-10-2002 |
| | | | US | 6771591 B1 | 03-08-2004 |
| EP 1624602 | A | 08-02-2006 | WO | 2004100413 A1 | 18-11-2004 |
| | | | JP | 3654646 B2 | 02-06-2005 |
| | | | TW | 244281 B | 21-11-2005 |
| | | | US | 2007036231 A1 | 15-02-2007 |

EPO FORM P0460

Pour tout renseignement concernant cette annexe : voir Journal Officiel de l'Office européen des brevets, No.12/82